# EUROPEAN PATENT APPLICATION

(11) **EP 4 671 521 A1**
(43) Date of publication of application: **31.12.2025**
(21) Application number: 25178917.8
(22) Date of filing: 27.05.2025
(51) Int. Cl.: F02C 7/264, F02C 7/28

(54) **SEAL STRUCTURE FOR A GAS TURBINE ENGINE**

(30) Priority: 25.06.2024 GB 202409063
(71) Applicant: Rolls-Royce plc, London N1 9FX (GB)
(72) Inventor: Soli, Alessandro, Derby, DE24 8BJ (GB); Armit, Christopher J, Derby, DE24 8BJ (GB); Muldal, Carl L, Derby, DE24 8BJ (GB); Walters, Edward A, Derby, DE24 8BJ (GB)
(74) Representative: Rolls-Royce plc

(57) **Abstract**

A seal structure (204) for a gas turbine engine (100). The seal structure (204) comprises a seal element (301), a retainer (302) having an outer transversal diameter (303) along a transversal axis (Y-Y) and engaging the seal element (301). The retainer (302) is connected to a supporting structure (304) and comprises an external upper surface having a central convex portion (305) and a peripheral curved portion (307).

## Description

### CROSS REFERENCE TO RELATED APPLICATIONS

This specification is based upon and claims the benefit of priority from United Kingdom patent application number GB 2409063.1 filed on June 25th, 2024, the entire content of which is incorporated herein by reference.

### FIELD

The present disclosure relates to a seal structure for a gas turbine engine and more particularly, a seal structure for a gas turbine engine combustor.

### BACKGROUND

The operational envelope of a gas turbine engine requires gas turbine engine components to efficiently operate in a wide range of demanding conditions. One aspect which significantly influences the holistic performance of gas turbine engines is aerodynamic efficiency. Therefore, those components which interact with air flows or air-fuel mixtures induce a varying degree of flow distortion depending on their exact configuration. Accordingly, a tendency to minimise the aerodynamic blockage caused by these components arises. However, manufacturing and cost considerations tend to limit the amount of aerodynamic optimisation which can be achieved in practice. Consequently, it is common for some components to feature sharp edges which exacerbate flow distortions and negatively impact the functionality of further downstream components and systems.

In the case of a gas turbine engine combustor, an igniter plug is typically slightly protruding through the flame tube walls and its location is optimised such that an electrical discharge from its tip can successfully ignite the air-fuel mixture inside the combustor. Igniter plugs typically engage with an igniter sleeve located on the flame tube outer wall, wherein the igniter sleeve typically features a floating seal to facilitate the insertion of the igniter plug and accommodate any relative movement between the combustor outer casing and the flame tube. The resulting configuration is that of an igniter tower having a particularly bulky housing for the floating seal and causing significant aerodynamic blockage and flow distortion within the outer annulus. Moreover, the housing often features sharp edges which further exacerbate annulus flow distortions.

Therefore, there is a need to improve both the aerodynamic performance and manufacturability of gas turbine components in order to increase the holistic performance of gas turbine engines.

### SUMMARY

In an aspect, there is provided a seal structure for a gas turbine engine, the seal structure comprising a seal element for arranging around a gas turbine engine component and a retainer having an outer transversal diameter along a transversal axis and engaging the seal element. The retainer is connected to a supporting structure for arranging around the component. The retainer comprises an external convex surface having a first central portion defining a first opening for inserting the component and a first peripheral curved portion defined by a first local radius ranging between 10% to 30% of the outer transversal diameter, wherein the first local radius is constant or variable across the first peripheral curved portion.

In an embodiment, the supporting structure comprises a neck defining a second opening for inserting the component and a lip having an external convex surface comprising a second central portion which extends outwardly from the neck and a second peripheral curved portion defined by a second local radius ranging between 5% to 25% of the outer transversal diameter, wherein the second local radius is constant or variable across the second peripheral curved portion.

In an embodiment, a height measured from an extremity of the retainer planarly aligned with an inlet of the first opening to an extremity of the lip of the supporting structure planarly aligned with an inlet of the second opening ranges between 25% to 40% of the outer transversal diameter.

In an embodiment, the retainer has an outer longitudinal diameter along a longitudinal axis which is oriented at an angle ranging between -30 degrees to +30 degrees relative to a local horizontal axis, and wherein the outer longitudinal diameter ranges between 100% and 200% of the outer transversal diameter.

In an embodiment, the angle is 0 degrees.

In an embodiment, the retainer has a curved outer perimeter situated in a plane defined by the transversal axis intersecting with the longitudinal axis, and wherein the curved outer perimeter is defined by a third local radius ranging between 50% and 150% of the outer transversal diameter, wherein the third local radius is constant or variable across the curved outer perimeter.

In an embodiment, the retainer and the supporting structure are connected as part of a unitary monolithic structure.

In an embodiment, the seal element is a floating seal.

In an embodiment, the supporting structure is an igniter plug sleeve for arranging around an igniter plug.

In an embodiment, the igniter plug sleeve further comprises at least one purging hole.

In another aspect, there is provided a gas turbine engine comprising a seal structure as previously recited.

In another aspect, there is provided a method of manufacturing a seal structure, the method comprising providing a seal element for arranging around a component and forming a retainer having an outer transversal diameter along a transversal axis. The retainer comprises a first opening for inserting the component and an external convex surface comprising a first central portion and a first peripheral curved portion defined by a first local radius ranging between 10% to 30% of the outer transversal diameter, wherein the first local radius is constant or variable across the first peripheral curved portion. The method further comprises engaging the seal element with the retainer and connecting the retainer to a supporting structure for arranging around the component.

In an embodiment, the retainer and the supporting structure are connected as part of a unitary monolithic structure.

In an embodiment, the retainer is connected to the supporting structure through electric resistance welding.

In an embodiment, the method further comprises forming the supporting structure such that the supporting structure comprises a neck defining a second opening for inserting the component and a lip. The lip has an external convex surface comprising a second central portion which extends outwardly from the neck and a second peripheral curved portion defined by a second local radius ranging between 5% to 25% of the outer transversal diameter, wherein the second local radius is constant or variable across the second peripheral curved portion.

In an embodiment, the retainer has an outer longitudinal diameter along a longitudinal axis which is oriented at an angle ranging between -30 degrees to +30 degrees relative to a local horizontal axis, wherein the outer longitudinal diameter ranges between 100% and 200% of the outer transversal diameter.

In an embodiment, the seal element is a floating seal.

In an embodiment, the forming comprises at least one of machining, additive manufacturing and casting.

In another aspect, there is provided a method of improving the performance of a gas turbine engine, the method comprising altering an installed seal structure to obtain a seal structure as previously recited.

In an embodiment, the alteration comprises at least one of replacing, machining, and adding to the installed seal structure.

### BRIEF DESCRIPTION OF THE DRAWINGS

Embodiments will now be described by way of example only, with reference to the accompanying drawings, which are purely schematic and not to scale, and in which:
FIG. 1 shows a gas turbine engine;
FIG. 2 is a side view of a gas turbine engine component located inside a generic gas passage of the gas turbine engine of FIG. 1;
FIG. 3 is a sectional view of the seal structure arranged around the gas turbine engine component of FIG. 2;
FIG. 4A is a side view of a streamlined seal structure arranged around a gas turbine engine component;
FIG. 4B is a top view of the streamlined seal structure of FIG. 4A;
FIG. 5 is a side view of a streamlined seal structure having a longitudinal axis parallel to the principal rotational axis of the gas turbine engine of FIG. 1;
FIG. 6A is a perspective view of the combustor of the gas turbine engine of FIG. 1;
FIG. 6B is a sectional view of the combustor of the gas turbine engine of FIG. 1;
FIG. 7 is a flowchart illustrating various steps of a method of manufacturing a seal structure.

### DETAILED DESCRIPTION

With regards to the embodiments described below, the local radius of a particular point on a curve is taken to mean the instantaneous radius of a circle which passes through that particular point. Each point on the curve has a corresponding local radius. Accordingly, depending on the shape of the curve, different points on the curve may be associated with different local radii. Therefore, a plurality of local radii may be necessary to fully define the curve. In such a case, it is understood that the value of the local radius varies across the curve.

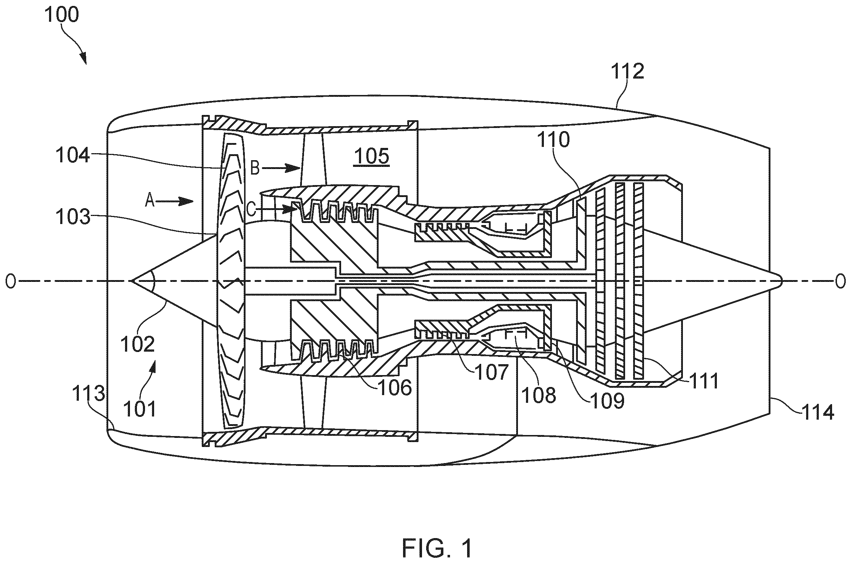

Referring to the drawings, a general arrangement of a gas turbine engine is shown in FIG. 1. In this embodiment, the engine is a gas turbine engine 100 with a principal rotational axis O-O. The engine 100 comprises a fan assembly 101, a bypass duct 105 and a core gas turbine. The core gas turbine comprises, in fluid flow series, an intermediate-pressure compressor 106, a high-pressure compressor 107, a combustor 108, a high-pressure turbine 109, an intermediate-pressure turbine 110, a low-pressure turbine 111. A nacelle 112 generally surrounds the engine 100 and defines both an intake 113 and an exhaust nozzle 114.

The fan assembly 101 comprises a plurality of fan blades 104 mounted upon a hub 103, and a nosecone 102 connected with the hub 103 and configurated to rotate therewith. Those skilled in the art will be familiar with the various possible arrangements for mounting fan blades and nosecones to fan hubs, along with any other aerodynamic fairings required to seal the inner gas-washed surface of the fan stage.

In operation, the fan assembly 101 receives intake air A, rotates and generates two pressurised airflows: a bypass flow B which passes axially through the bypass duct 105, and a core flow C which enters the core gas turbine. The core flow C is compressed by the intermediate-pressure compressor 106 and is then directed into the high-pressure compressor 108 where further compression takes place. The compressed air exhausted from the high-pressure compressor 107 is directed into the combustor 108 where it is mixed with fuel and the mixture is combusted. The resultant hot combustion products then expand through, and thereby drive, the high-pressure turbine 109, the intermediate-pressure turbine 110, and the low-pressure turbine 111, before being exhausted via the exhaust nozzle 114 to provide a proportion of the overall thrust.

The high-pressure turbine 109 drives the high-pressure compressor 107 via an interconnecting shaft. The intermediate-pressure turbine 110 drives the intermediate-pressure compressor 106 via another interconnecting shaft. The low-pressure turbine 111 drives the fan assembly 101 via yet another interconnecting shaft. The three interconnecting shafts are arranged concentrically around O-O. Those skilled in the art will recognise the engine 100 as having a direct-drive, three-shaft architecture.

It will be appreciated that in other embodiments, the engine 100 could alternatively be configured as a direct-drive, two-shaft architecture in which the intermediate-pressure spool is omitted. In one such configuration, both the intermediate-pressure compressor 106 and the intermediate-pressure turbine 110 may be omitted. In operation, the fan blades 104 would provide an initial stage of compression, with the remainder of the overall pressure ratio of the engine 100 being delivered by the high-pressure compressor 107. Another direct-drive, two-shaft architecture may be implemented by providing a booster compressor between the fan assembly 101 and the high-pressure compressor 107, the booster compressor being driven by the low-pressure turbine 111.

In other embodiments, the engine 100 may be configured with a geared architecture, in which the low-pressure turbine 111 drives the fan assembly 101 via a reduction gearbox. The reduction gearbox may be an epicyclic gearbox of star, planetary or compound configuration. Alternatively, the reduction gearbox may be of any other suitable configuration, such as a layshaft.

It will be appreciated that in other embodiments, the engine 100 could be configured such that the fan assembly 101 generates a single pressurised airflow which is routed entirely into the core gas turbine. In this configuration, the bypass duct 105 may be omitted and the core gas turbine provides the entirety of the engine 100 thrust.

In other embodiments, the engine 100 could be configured without a nacelle 115 in order to be employed as a ductless fan aero engine or open fan aero engine, a marine gas turbine engine or land-based gas turbine engine.

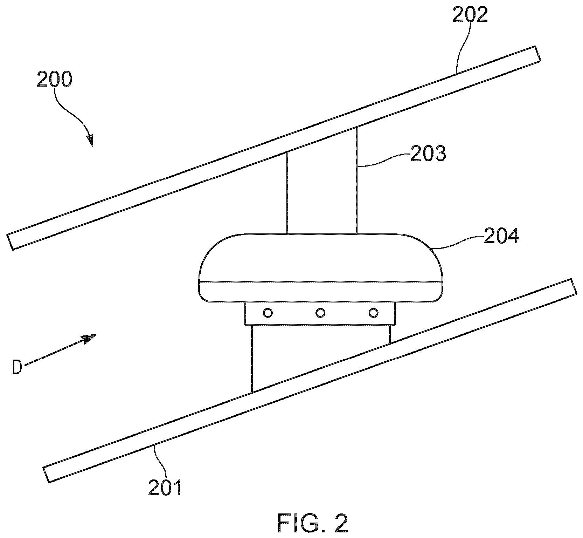

FIG. 2 illustrates a generic gas passage 200 of the engine 100. The gas passage 200 may be situated in a plurality of locations across the engine 100 such as the bypass duct 105, the intermediate-pressure compressor 106, the high-pressure compressor 107, the combustor 108, the high-pressure turbine 109, the intermediate-pressure turbine 110 or the low-pressure turbine 111. The gas passage 200 is formed between an inner wall 201 and an outer wall 202. The centreline of the gas passage 200 may be parallel or inclined relative to the engine principal rotation axis O-O. An engine component 203 extends between the outer wall 202 and the inner wall 201 and may penetrate either or both walls. In this embodiment, the engine component 203 is a standard gas turbine engine component such as an igniter plug 606 described below. However, in other embodiments, the engine component 203 may be a complementary component enhancing the operation of the gas turbine engine such as a flow measurement device. A seal structure 204 is arranged around the engine component 203 to minimise flow leakage and allow for reciprocal movement.

In operation, gas flow D passes through the gas passage 200 and interacts with the engine component 203 and the seal structure 204. The gas flow D may be an air flow or an air-fuel mixture. The engine component 203 and the seal structure 204 distort gas flow D and the resulting downstream flow field is perturbed. However, the overall aerodynamic penalty is minimised since the shape of the seal structure 204 has a two-fold performance benefit. Firstly, a separation bubble is prevented from forming on the leading edge of the seal structure 204. Secondly, the overall dimension of the wake forming after the trailing edge of the seal structure 204 is significantly reduced.

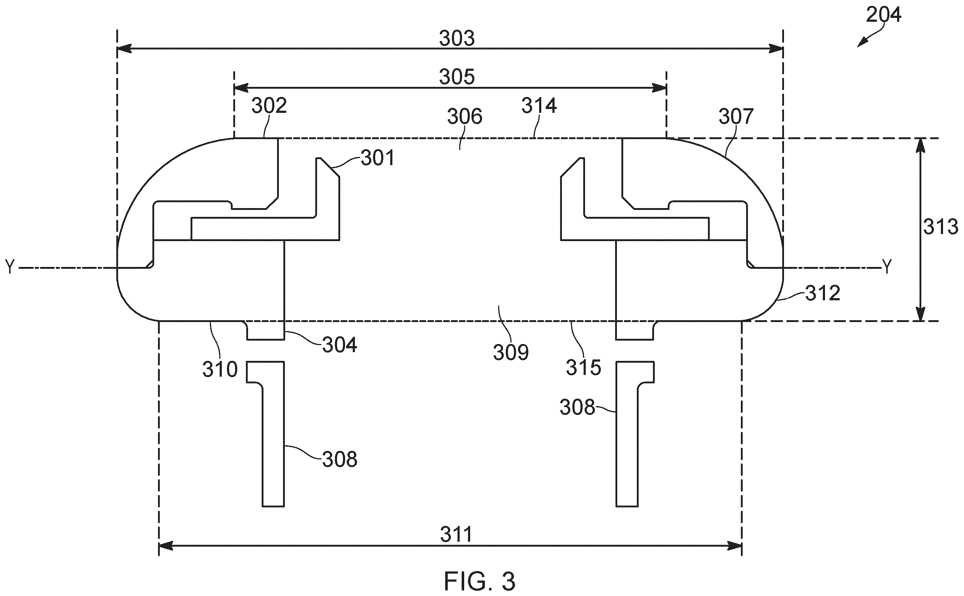

Referring again to the drawings, FIG.3 shows a sectional view of the seal structure 204. In this embodiment, the seal structure 204 comprises a seal element 301 which may be arranged around the engine component 203. The seal structure 204 further comprises a retainer 302 which engages the seal element 301 and has an outer transversal diameter 303 along a transversal axis Y-Y. The retainer 302 is connected to a supporting structure 304 which may be arranged around the engine component 203.

The retainer 302 comprises an external convex surface having a first central portion 305 defining a first opening 306, wherein the engine component 203 may be inserted through the first opening 306. The retainer 302 further comprises a first peripherical curved portion 307 defined by a first local radius ranging between 10% to 30% of the outer transversal diameter 303. In operation, it was found that this curvature profile mitigates the formation of a separation bubble and minimises the flow perturbation induced by the seal structure 204. Thus, this specific curvature profile serves to reduce the aerodynamic penalty of the seal structure 204. In some embodiments, the first local radius ranges between 10% to 25% of the outer transversal diameter 303. In this specific embodiment, the first local radius is constant across the first peripheral curved portion 307. However, it will be appreciated that the first local radius may be variable across the first peripheral curved portion 307.

In this specific embodiment, the seal element 301 is a floating seal 301. The retainer 302 engages the floating seal 301 such that the floating seal 301 has the required freedom of movement to accommodate the displacement associated with operational effects such as thermal expansion or vibration-induced movement. Furthermore, the floating seal 301 facilitates the alignment and insertion of the engine component 203 through at least one of the inner wall 201 or outer wall 202 and the first opening 306 of the retainer 302. However, in other embodiments, the seal element 301 may be a different type of seal and the retainer 302 engages the seal element 301 such that the seal element 301 has limited freedom of movement or is fully restrained.

In this specific embodiment, the retainer 302 is connected to the supporting structure 304 through electric resistance welding such as spot welding. However, it will be appreciated that other methods of connecting the retainer 302 with the supporting structure 304 are also possible. For example, in other embodiments, the retainer 302 and the supporting structure 304 are intrinsically connected by being part of a unitary monolithic structure.

The supporting structure 304 comprises a neck 308 defining a second opening 309, wherein the engine component 203 may be inserted through the second opening 309. The supporting structure 304 further comprises a lip 310 having an external convex surface which includes a second central portion 311 extending outwardly from the neck 308 and a second peripheral curved 312 defined by a second local radius ranging between 5% to 25% of the outer transversal diameter 303. In operation, it was found that this curvature profile complements the configuration of the retainer 302 and contributes towards an optimised aerodynamic performance for the seal structure 204. In some embodiments, the second local radius ranges between 5% to 15% of the outer transversal diameter. In this specific embodiment, the second local radius is constant across the second peripheral curved portion 312. However, it will be appreciated that the second local radius may be variable across the second peripheral curved portion 312.

A height 313 of the seal structure 204 is measured from an uppermost extremity 314 of the retainer 302 to a lowermost extremity 315 of the lip 310 of the supporting structure 304, wherein the height 313 ranges between 25% to 40% of the outer transversal diameter 303. In operation, it was found that this height configuration is advantageous with regards to further minimising the overall dimension of the wake forming after the trailing edge of the seal structure 204.

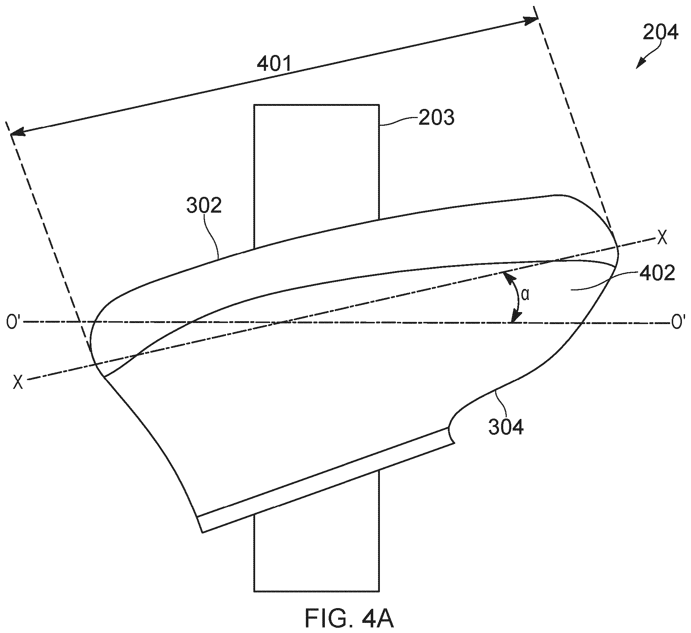

A side view of a streamlined embodiment of the seal structure 204 is shown in FIG. 4A. The retainer 302 has an outer longitudinal diameter 401 along a longitudinal axis X-X which is oriented at an angle 402 ranging between -30 degrees to +30 degrees relative to a local horizontal axis O'-O', wherein the local horizontal axis O'-O' is parallel to the engine principal rotational axis O-O. In some embodiments, the angle 402 ranges between -15 degrees to +15 degrees relative to the local horizontal axis O'-O'. The outer longitudinal diameter 401 ranges between 100% and 200% of the outer transversal diameter 303.

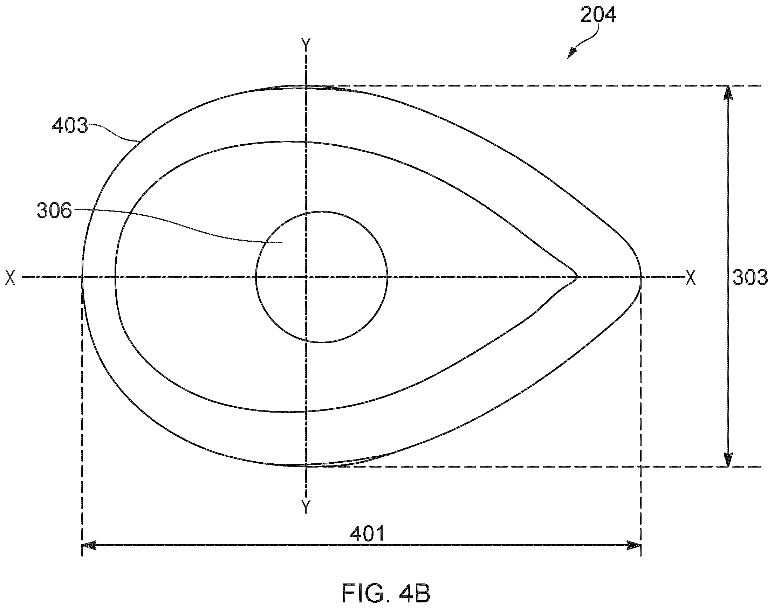

FIG. 4B shows a top view of the streamlined embodiment of the seal structure 204 of FIG. 4A. The retainer 302 has a curved outer perimeter 403 which lies in a plane defined by the intersection of the transversal axis Y-Y with the longitudinal axis X-X. The curved outer perimeter 403 is defined by a third local radius ranging between 50% and 150% of the outer transversal diameter 303. In this specific embodiment, the third local radius takes two different values across the curved outer perimeter 403. However, it will be appreciated the third local radius may take additional values, thereby further varying, across the curved outer perimeter 403. Alternatively, the third local radius may be constant across the curved outer perimeter 403.

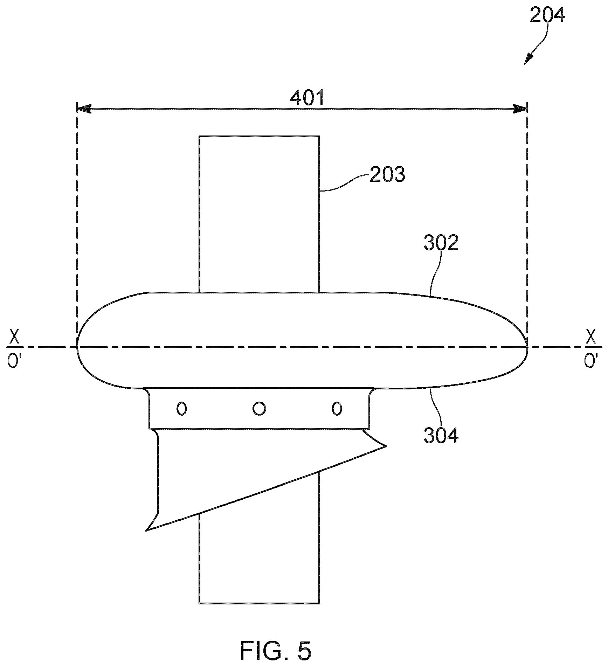

FIG. 5 presents the streamlined embodiment of the seal structure 204 of FIG. 4A, wherein angle 402 is equal to 0 degrees. In this specific embodiment, the longitudinal axis X-X is parallel to the local horizontal axis O'-O'.

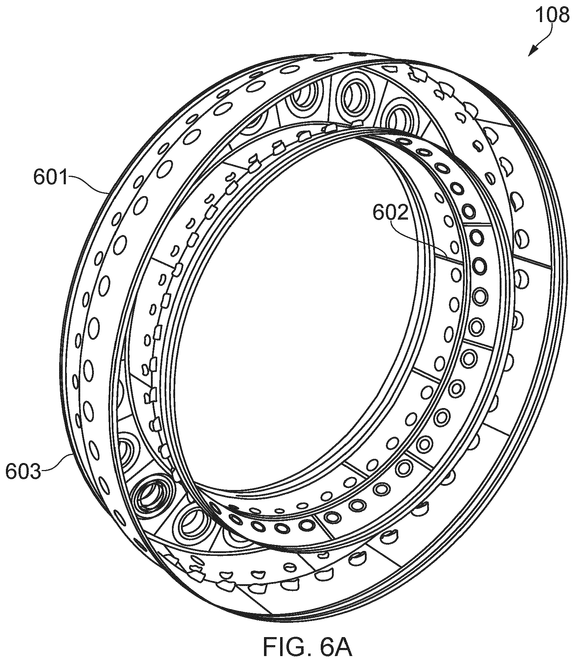

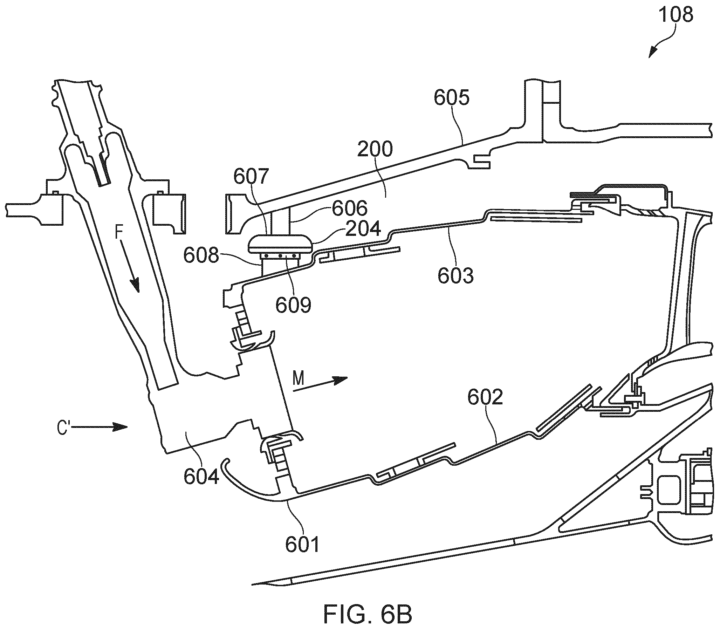

The combustor 108 is shown in perspective view in FIG. 6A and in sectional view in FIG. 6B. The combustor 108 includes a liner 601 which comprises an inner porous wall 602 and an outer porous wall 603. The combustor 108 further includes a plurality of fuel injectors 604, an outer casing 605 and at least one igniter plug 606 inserted through the outer casing 605. In this specific embodiment, the seal structure 204 is arranged around the igniter plug 606 to form an igniter tower assembly 607. Furthermore, the supporting structure 304 is an igniter plug sleeve 608. The igniter plug sleeve 608 may comprise at least one purging hole 609. In this specific embodiment, the seal element 301 of the seal structure 204 is a floating seal 301 which facilitates the insertion of the igniter plug 606 through the outer casing 605. However, in other embodiments, the seal element 301 may be a different type of seal other than a floating seal 301.

In operation, the combustor 108 is configured to receive the compressed air C' exhausted from the high-pressure compressor 107, mix a proportion of this airflow C' with a supply of fuel F from the fuel injectors 604 and ignite the resulting mixture M via the at least one igniter plug 606 to form combustion products. A proportion of airflow C' enters the gas passage 200 delimited by the outer casing 605 and the liner's outer porous wall 603 and interacts with the igniter tower assembly 607. The presence of the seal structure 204 minimises the amount of air flow distortion and reduces the aerodynamic penalty associated with the igniter tower assembly 607. Accordingly, the reduced perturbations in the air flow downstream of the igniter tower assembly 607 contributes towards a more efficient utilisation of the air mass flow budget allocated for the combustor 108. This efficiency drives gas turbine engine enhancements in terms of both performance and durability.

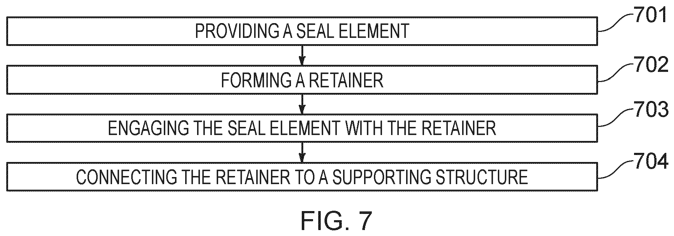

The steps associated with a method of manufacturing a seal structure 204 are shown in FIG. 7. Step 701 relates to providing a seal element 301 which may be arranged around an engine component 203 located in a gas passage 200 formed between an inner wall 201 and an outer wall 202. The seal element 301 may be provided as a separate component. Alternatively, the seal element 301 may be provided in an installed or deployed configuration as part of a seal structure arrangement containing the engine component 203.

Step 702 relates to forming a retainer 302 having an outer transversal diameter 303 along a transversal axis Y-Y. The retainer 302 comprises a first opening 306 through which the engine component 203 may be inserted and an external convex surface which includes a first central portion 305 and a first peripheral curved portion 307. The first peripheral curved portion 307 is defined by a first local radius ranging between 10% to 30% of the outer transversal diameter 303. In some embodiments, the first local radius ranges between 10% to 25% of the outer transversal diameter 303. The first local radius may be constant or variable across the first peripheral curved portion 307.

The retainer 302 may further comprise an outer longitudinal diameter 401 along a longitudinal axis X-X which is oriented at an angle 402 ranging between -30 degrees to +30 degrees relative to a local horizontal axis O'-O', wherein the local horizontal axis O'-O' is parallel to the engine principal rotational axis O-O. In some embodiments, the angle 402 ranges between -15 degrees to +15 degrees relative to the local horizontal axis O'-O'. The outer longitudinal diameter 401 ranges between 100% and 200% of the outer transversal diameter 303. Additionally, in this configuration, the retainer 302 may further comprise a curved outer perimeter 403 which lies in a plane defined by the intersection of the transversal axis Y-Y with the longitudinal axis X-X. The curved outer perimeter 403 is defined by a third local radius ranging between 50% and 150% of the outer transversal diameter 303. The third local radius may be constant or variable across the curved outer perimeter 403.

Step 703 relates to engaging the seal element 301 with the retainer 302. The seal element 301 may be a floating seal 301 and, in this case, the resulting engagement allows the floating seal 301 the required freedom of movement to accommodate the displacement associated with operational effects such as thermal expansion or vibration-induced movement. Furthermore, the floating seal 301 facilitates the alignment and insertion of the engine component 203 through at least one of the inner wall 201 or outer wall 202 and the first opening 306 of the retainer 302. However, in other embodiments, the seal element 301 may be a different type of seal and the retainer 302 engages the seal element 301 such that the seal element 301 has limited freedom of movement or is fully restrained.

Step 704 relates to connecting the retainer 302 to a supporting structure 304 which may be arranged around the engine component 203. The configuration of the supporting structure 304 may be obtained after a further forming step prior to step 704. The resulting arrangement for the supporting structure 304 comprises a neck 308 defining a second opening 309 through which the engine component 203 may be inserted. The resulting supporting structure 304 further comprises a lip 310 having an external convex surface which includes a second central portion 311 extending outwardly from the neck 308 and a second peripheral curved 312 defined by a second local radius ranging between 5% to 25% of the outer transversal diameter 303. In some embodiments, the second local radius ranges between 5% to 15% of the outer transversal diameter. The second local radius may be constant or variable across the second peripheral curved portion 312. Additionally, in this configuration, the resulting seal structure 204 may comprise a height 313 measured from an uppermost extremity 314 of the retainer 302 to a lowermost extremity 315 of the lip 310 of the supporting structure 304, wherein the height 313 ranges between 25% to 40% of the outer transversal diameter 303.

The retainer 302 may be connected to the supporting structure 304 through electric resistance welding such as spot welding. However, it will be appreciated that other methods of connecting the retainer 302 with the supporting structure 304 are also possible. For example, in other embodiments, the retainer 302 and the supporting structure 304 are intrinsically connected by being part of a unitary monolithic structure.

In this specific embodiment, steps 701 to 704 are shown in succession of each other. However, it will be appreciated that these steps may also be performed in a different order. For example, in other embodiments, steps 702 and 704 are both performed prior to step 701 and/or step 703.

With regards to any steps involving forming, it will be appreciated that various manufacturing techniques can be employed in order to arrive at the configurations described above. In particular, it is possible to employ machining, additive manufacturing, casting or any combination thereof. These manufacturing techniques may be applied to a retainer 302 and/or a supporting structure 304 having an initial state, composition and arrangement to arrive at the final configurations. Alternatively, these manufacturing techniques may be applied directly to the seal element 301 to generate the retainer 302 and/or the supporting structure 304 from the seal element 301 itself.

The seal element 301 may be installed or deployed as part of a seal structure arrangement containing an engine component 203. In such a case, a method of improving the performance of a gas turbine engine 100 is proposed. The method comprises altering the installed seal structure in order to obtain a seal structure 204 as described above. It will be appreciated that the alteration may be realised in a plurality of ways. In particular, the installed seal structure may be altered by replacing at least one part of the existing configuration. In other embodiments, the installed seal structure may be altered by machining at least one part of the existing configuration. In other embodiments, the installed seal structure may be altered by incorporating additional parts or elements. The incorporation may be realised through additive manufacturing, an adhesive composition, welding, a conventional joining technique such as bolting or riveting or any combination thereof. It will be appreciated that the aforementioned alteration techniques can be combined as part of the overall alteration step.

Various examples have been described, each of which comprise various combinations of features. It will be appreciated by those skilled in the art that, except where clearly mutually exclusive, any of the features may be employed separately or in combination with any other features and the scope of the subject-matter disclosed extends to and includes all combinations and sub-combinations of one or more features described herein.

## Claims

1. A seal structure (204) for a gas turbine engine (100), the seal structure (204) comprising:
a seal element (301) for arranging around a gas turbine engine component (203); and
a retainer (302) having an outer transversal diameter (303) along a transversal axis (Y-Y) and engaging the seal element (301), wherein the retainer (302) is connected to a supporting structure (304) for arranging around the component (203);
the retainer (302) comprising an external convex surface having a first central portion (305) defining a first opening (306) for inserting the component (203) and a first peripheral curved portion (307) defined by a first local radius ranging between 10% to 30% of the outer transversal diameter (303), wherein the first local radius is constant or variable across the first peripheral curved portion (307).

2. The seal structure of claim 1, wherein the supporting structure (304) comprises a neck (308) defining a second opening (309) for inserting the component (203) and a lip (310) having an external convex surface comprising a second central portion (311) which extends outwardly from the neck (308) and a second peripheral curved portion (312) defined by a second local radius ranging between 5% to 25% of the outer transversal diameter (303), wherein the second local radius is constant or variable across the second peripheral curved portion (312).

3. The seal structure of claim 2, wherein a height (313) measured from an extremity (314) of the retainer (302) planarly aligned with an inlet of the first opening to an extremity (315) of the lip (310) of the supporting structure (304) planarly aligned with an inlet of the second opening ranges between 25% to 40% of the outer transversal diameter (303).

4. The seal structure of any of the preceding claims, wherein the retainer (302) has an outer longitudinal diameter (401) along a longitudinal axis (X-X) which is oriented at an angle (402) ranging between -30 degrees to +30 degrees relative to a local horizontal axis (O'-O'), and wherein the outer longitudinal diameter (401) ranges between 100% and 200% of the outer transversal diameter (303).

5. The seal structure of claim 4, wherein the retainer (302) has a curved outer perimeter (403) situated in a plane defined by the transversal axis (Y-Y) intersecting with the longitudinal axis (X-X), and wherein the curved outer perimeter (403) is defined by a third local radius ranging between 50% and 150% of the outer transversal diameter (303), wherein the third local radius is constant or variable across the curved outer perimeter (403).

6. The seal structure of any of the preceding claims, wherein the retainer (302) and the supporting structure (304) are connected as part of a unitary monolithic structure.

7. The seal structure of any of the preceding claims, wherein the seal element (301) is a floating seal (301).

8. The seal structure of any of the preceding claims, wherein the supporting structure (304) is an igniter plug sleeve (608) for arranging around an igniter plug (606).

9. The seal structure of claim 8, wherein the igniter plug sleeve (608) further comprises at least one purging hole (609).

10. A gas turbine engine (100) comprising a seal structure (204) according to any of the claims 1 to 9.

11. A method of manufacturing a seal structure (204), the method comprising:
providing a seal element (301) for arranging around a component (203);
forming a retainer (302) having an outer transversal diameter (303) along a transversal axis (Y-Y) and comprising a first opening (306) for inserting the component (203) and an external convex surface comprising a first central portion (305) and a first peripheral curved portion (307) defined by a first local radius ranging between 10% to 30% of the outer transversal diameter (303), wherein the first local radius is constant or variable across the first peripheral curved portion (307);
engaging the seal element (301) with the retainer (302);
connecting the retainer (302) to a supporting structure (304) for arranging around the component (203).

12. The method of manufacturing of claim 11, wherein the retainer (302) and the supporting structure (304) are connected as part of a unitary monolithic structure.

13. The method of manufacturing of claim 12, wherein the retainer (302) is connected to the supporting structure (304) through electric resistance welding.

14. The method of manufacturing of any of the claims 11 to 13, wherein the forming comprises at least one of machining, additive manufacturing and casting.

15. A method of improving the performance of a gas turbine engine (100), the method comprising altering an installed seal structure to obtain a seal structure (204) according to any of claims 1 to 9.
